# EUROPEAN PATENT SPECIFICATION

(11) **EP 1 951 827 B1**
(45) Date of publication and mention of the grant of the patent: **08.12.2010**
(21) Application number: 06826741.8
(22) Date of filing: 26.10.2006
(51) Int. Cl.: C09D 11/00

(54) **LOW CORROSIVITY INKS AND INK SYSTEMS AND METHODS OF MAKING LOW CORROSIVITY INKS**
WENIG KORROSIVE TINTEN UND TINTENSYSTEME SOWIE VERFAHREN ZUR HERSTELLUNG VON WENIG KORROSIVEN TINTEN
ENCRES DE FAIBLE CORROSIVITE, SYSTEMES D' ENCRES ET PROCEDES DE FABRICATION D' ENCRES DE FAIBLE CORROSIVITE

(30) Priority: 28.10.2005 US 260997
(43) Date of publication of application: 06.08.2008
(73) Proprietor: HEWLETT-PACKARD DEVELOPMENT COMPANY, L.P., Houston TX 77070 (US)
(72) Inventor: MUBAREKYAN, Ervin, San Diego, CA 92127-1899 (US); SCHMID, Christian, San Diego, CA 92127-1899 (US); BRUINSMA, Paul, J., San Diego, CA 92127-1899 (US); ANDERSON, Richard, San Diego, CA 92127-1899 (US); TSAO, Yi-Hua, San Diego, CA 92127-1899 (US)
(74) Representative: Durville, Guillaume
(86) International application number: PCT/US2006/041795
(87) International publication number: WO 2007/053421

(56) References cited:
- EP-A2- 1 308 491
- WO-A-2005/028578
- WO-A-2006/074483

## Description

### BACKGROUND

The present disclosure relates to inkjet ink sets, where a 'set' comprises back and color inks, as well as a fixer fluid, and wherein the fixer fluid has low corrosivity towards metals (*e.g*., steel, aluminum). A fixer fluid can be printed along with standard inks to improve print quality and durability of the printed ink on a medium. While these fixers increase the waterfastness, smudgefastness, and/or light-fastness of the inks, they typically are corrosive to the printhead or pen that houses them.

Typical fixers rely on cationic polymers such as, for example, poly(ethylene imine) (PEI), polyamines, quaternized polyamides, polyguanidines, dicyandiamide resins and poly(diallyldimethyl ammonium) resins in an aqueous solution to complex with and insolubilize dyes and pigments in aqueous ink formulations. Commercially available polycations are typically supplied with chloride counterions. Chloride may cause pitting corrosion of aluminum components within the printhead. Based on literature, the chloride ion is known to accelerate the corrosion of aluminum by dissolving away the protective oxide layer on the aluminum surface. *See, e,g.,* Gu, H.C.; Huang, S.J.; Liu, X.F., Corrosion, V58, No. 10, 826-834, 2002 and McCafferty, E., J. Electrochemical Soc., 150, 7, B342-347, 2003.

For example, a solution sample containing 1 wt % NaCl generates 50 times more anodic current than a sample containing 0.01 wt % NaCl, and 1500 times more anodic current than deionized water. Anodic current is directly proportional to corrosion rate.

Due to pen imperfections and pitting from the chloride ions in the fixer solutions, premature pen failure can result. In addition, fixers with high chloride content may require special handling during transportation due to their corrosive nature, adding to product cost, and perhaps making air-shipments impractical. Thus, it is desirable to have a method of reducing the negative impact of fixer formulations on printhead components, while maintaining their other desirable properties.

### SUMMARY

Briefly described, embodiments of this disclosure include low corrosivity inkjet ink sets and ink systems, and methods of preparing low corrosivity inks. One exemplary low corrosivity inkjet ink system, among others, includes and ink formulation and a fixer formulation.

The present invention provides a fixer formulation for inkjet printing comprising: water; a polycationic fixing agent which is a cationic polymer; and a counterion, wherein the counterion is chosen to reduce the presence of halogen in the fixer and is chosen from at least one of the following: an acetate, a nitrate, a sulfate, a phosphate, a propionate, a malonate, a mesylate, a lactate, a sulfonate, a phosphonate, a triflate, and combinations thereof.

The present invention further provides a method of making an ink formulation substantially non-corrosive, comprising the steps of: dissolving a polycation which is a cationic polymer, with a non-halogen containing counterion chosen from at least one of the following: an acetate, a nitrate, a sulfate, a phosphate, a propionate, a malonate, a mesylate, a lactate, a sulfonate, a phosphonate, a triflate, and combinations thereof, in a solvent to form to fixing formulation in a first vehicle; and preparing an ink formulation in a second vehicle, wherein the fixing formulation is used to undercoat or overcoat the ink formulation on a substrate.

The present invention further provides an inkjet ink system with low corrosivity, the system comprising: an ink, wherein the ink comprises a colorant, and a first aqueous vehicle for the colorant, and a substantially non-corrosive fixer as described herein, wherein the fixer comprises a second aqueous vehicle for the fixer.

Other inkjet ink sets and ink systems, methods of preparing low corrosivity inks, and fixer formulations are described in more detail below.

### BRIEF DESCRIPTION OF THE DRAWINGS

Many aspects of this disclosure and the embodiments of the invention described herein can be better understood with reference to the following drawings. The components in the drawings are not necessarily to stale. Moreover, in the drawings, like reference numerals designate corresponding parts throughout the several views.
FIG. 1 illustrates a bar chart of the results of an official U.S. Department of Transportation (DOT) test method for corrosion as performed on various exemplary fixers for 1 week extrapolated to one year.
FIG. 2 illustrates a bar chart of the results of an official U.S. DOT test method for corrosion as performed on various exemplary fixers for 1 day extrapolated to one year.

### DETAILED DESCRIPTION

In order to obtain images that are durable to smear, smudge, or water, inks containing pigments and/or anionic dyes are underprinted and/or overprinted with fixer fluids containing cationic polymers. The dye/polymer complex forms a durable mixture that is resistant to smearing and is waterfast. Fixers commonly operate by creating an adverse charge-charge interaction with a colorant in aqueous ink, thereby precipitating and fixing the colorant on the substrate surface. This mechanism is effective with aqueous inks because the colorant is typically stabilized to dispersion or solution by an ionic mechanism. A fixer with opposite charge effectively destabilizes and fixes the colorant. With pigment-based inks, the typically low pH of the fixer crashes the pigments, making them difficult to re-disperse in water.

The disclosed ink composition includes one or more colorant(s), an aqueous vehicle and, optionally, other ingredients such as surfactants, dispersants, binders, and/or other additives and adjuvants well known in the relevant art. The ink composition is applied to a substrate in combination with the fixer (fixing) fluid, the fixer fluid including a fixing agent in an aqueous vehicle. The fixer fluid can be applied to the substrate first, and then the ink printed on top of the applied fixer. Alternatively, the ink can be applied to the substrate first, and then the fixer fluid printed on top of the applied ink.

### Colorant for Aqueous Ink

The colorant can be soluble or dispersed in an aqueous ink vehicle. Soluble colorants (*e.g*., dyes) are dissolved in the aqueous vehicle, while insoluble colorants (*e.g.*, pigments) are stably dispersed.

Suitable dyes for inkjet applications are generally well known. A representative selection of such dyes can be found, for example, in U.S. Pat. No. 5,932,631 and U.S. SIR H1967.

The exact choice of dyes depends upon the color reproduction and print quality requirements of the application.

Dyes used in an aqueous ink vehicle are most commonly ionic in character, which means they form an ionic (anionic or cationic depending on the specific dye) chromaphore in aqueous solution. Frequently, these dyes are only slightly soluble in a nonaqueous vehicle.

Non-limiting examples of anionic dyes that are effective with the disclosed fixers are: direct black dyes, such as Direct Black 168 (DB168), Direct Black 19 (DB19), variants of Fast Black 2; phthalocyanine cyan dyes, such as ProJet Cyan 485; acid cyan dyes, such as Acid Blue 9 (AB9), Acid Blue 7 (AB7); mixtures of acid cyan and phthalocyanine cyan, such as AB9 and ProJet Cyan 485; gamma acid magenta dyes, such as Magenta 37.7 (M377); H-acid magenta dyes, such as ProJet Magenta 364 (M364); Xanthene magenta dyes, such as Acid Red 289 (AR289); mixtures of H-acid magenta and Xanthene magenta dyes, such as mixtures of ProJet Magenta 364 and AR289; direct yollow dyes, such as Direct Yellow 132 (DY132); acid yellow dyes such as Acid Yellow 23 (AY23); and mixtures of direct yellow dyes and acid yellow dyes, such as mixtures of DY132 and AY23.

Suitable pigments for inkjet applications are also generally well known. A representative selection of such pigments can be found, for example, in U.S. Pat. No. 5,026,427, U.S. Pat. No. 5,086,698, U.S. Pat. No. 5,141,556, U.S. Pat. No. 5,169,436 and U.S. Pat. No. 6,160,370.

The exact choice of pigment depends upon color reproduction and print quality requirements of the application. The pigment may be black, such as those based on carbon black, or may be colored such as those based on cyan (*e.g*., PB 15:3 and 15:4), magenta (*e.g*., PR 122 and 123), and yellow (*e.g*., PY 128, 74 and 120). Suitable pigments also include self-dispersing pigments (SDPs). SDPs for aqueous inks are well known.

It is desirable to use small pigment particles for maximum color strength and good jetting. The particle size may generally be in the range of from 0.005 to 15 microns, is typically in the range of from 0.005 to 1 micron, or from 0.005 to 0.5 micron, or from 0.01 to 0,3 micron.

The levels of pigment employed in the inks disclosed herein are those levels that are typically needed to impart the desired optical density (OD) to the printed image. Typically, pigment levels are in the range of from 0.01% to 10% by weight, based on the total weight of the ink.

### Fixing Fluid

The fixing fluid comprises an aqueous vehicle and an effective amount of one or more fixing agents. A fixing agent is an ingredient that initiates a change in the Solubility or stability of the colorant and fixes the colorant in place in the printed image. An "effective amount" of fixing agent is an amount that is effective in achieving an improvement in print quality, *e.g*., decreased strikethrough and bleed, increased optical density (OD), chroma, edge acuity, and improved drip and smear fastness, as compared to a print that has not been fixed.

One mechanism of fixation, though not necessarily the only one, is interaction of a polycation in the fixing agent with an anionic dye in the aqueous ink. Alternatively, for pigment-based inks, the fixer lowers the pH of ink whereby the pigments crash, rendering them insoluble in water. Fixers can include multivalent ions, salts, and acids thereof that are soluble in the aqueous vehicle to facilitate pigment crashing.

The fixing fluid can be formulated for high spread and quick penetration and drying. To achieve these properties, surfactants and/or penetrating solvents are typically employed. The surface tension can be less than 40 mN/m. Typically, the fixer fluid can be 0.1 % to 20%, more preferably 1.0% to 15%, fixing agent based on the total weight of the fixing fluid.

Inkjet inks with anionic colorants have been found to work well with fixer solution including cationic polymers. The use of such cationic polymer fixer solutions increases durability and waterfastness of anionic colorant ink-printed images.

The fixer solution can be applied onto the media substrate by any method available to spread the fixer accurately onto the substrate surface to be printed. For example, the fixer solution can be filled in a thermal inkjet pen and the fixer applied on the media or substrate before and/or after the color inks are applied. As a non-limiting example, an HP Business Inkjet 2200 can be used.

To increase durability and waterfastness of the printed Image on the medium or substrate, the cationic polymers used in the fixer are highly reactive to fix the anionic colorants in the printed image. In one embodiment, the cationic polymer is a polycationic fixing agent that has a structure such that the polycation is capable of complexing with an insolubilizing an anionic dye. For example, polyguanidines, polymonoguanidines, polyamines, quaternized polyamines, and/or polyethyleneimines (*e.g*., polyethyleneimine (PEI) or methylated PEI), dicyandiamide resins, and/or poly(diallyldimethyl ammonium) resins have been found to be effective cationic polymers for this purpose. By way of further example, but not for purpose of limitation, other polymers with quaternary nitrogen atoms or that have nitrogen atoms that can be rendered cationic are also employed to immobilize the dye.

In one embodiment, the cationic polymers are polymonoguanidines, for example but not limited to, poly (C₃₋₁₈-hydrocarbyl monoguanidines). Examples of poly (C₃₋₁₈hydrocarbyl monoguanidines) that can be used in the disclosed fixer compositions include those, for example, disclosed in U.S. Patent Application Serial No. 10/443,566.

As noted previously, commercially available polycations have typically been supplied with chlorine counterions. Chloride or other halogens may cause pitting corrosion of aluminum components within the inkjet printhead. It has been discovered that use of non-halogen counterions for the polycations of the fixer greatly reduces corrosion of the printhead. Use of a non-corrosive counterion in the fixer can increase the life of a typical printhead. Additionally, the use of non-corrosive counterions can reduce shipping restrictions for the fixer. For example, a fixer with reduced or minimized corrosivity as disclosed heroin can pass the official U.S. Department of Transportation (DOT) test method for corrosion, ASTM G31-72.

The counterion is selected from at least one of one of the following : an acetate, a nitrate, a sulfate, a phosphate, a propionate, a malonate, a mesylate, a lactate, a sulfonate, a phosphonate, a triflate, or any non-halogen anion, or combinations thereof.

The disclosed fixer may further include any one or any combination of the following: water, a water soluble cosolvent, a watermiscible surfactant, a polycationic fixing agent that contains less than 500 ppm halogen per polymer solids, and/or an acid. For example, one exemplary fixer formulation can include the following: water in an amount of 50-95 wt % of the fixer formulation; a water soluble cosolvent having a lower vapor pressure than water in an amount of 5-35 wt % of the fixer formulation; a water miscible surfactant in an amount of 0.01-2 wt % of the fixer formulation; the polycationic fixing agent in an amount of 0.5-8 wt %, or 2-5%, of the fixer formulation, wherein the polycationic fixing agent contains less than about 500 ppm halogen per polymer solids; and an acid in an amount of 1-20 wt % of the fixer formulation, wherein the acid has a pKa of 3-6. The amount of halogen should be lower than typical chloride-based polycationic fixing agent. For example, a conventional fixing agent at 7000 ppm chloride will not pass the DOT corrosivity test, described in more detail below.

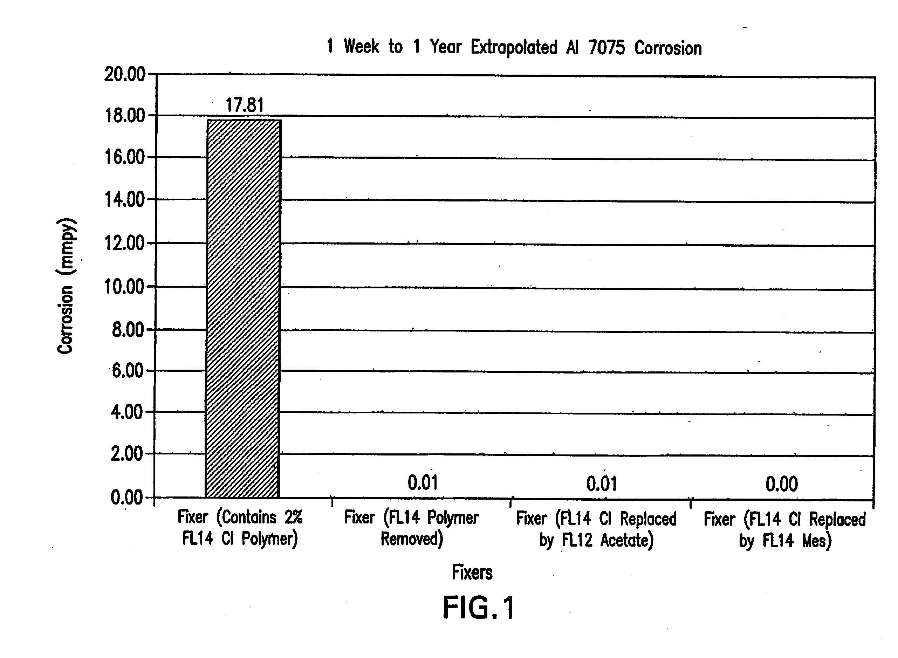

FIG. 1 illustrates a bar chart of the results of the official U.S. Department of Transportation (DOT) test method for corrosion as performed on various - exemplary disclosed fixers, compared to a prior art fixer, for one week extrapolated to one yoar. The official DOT method (ASTM G31-72) for laboratory immersion corrosion testing of metals was duplicated to predict the corrosion rates that would be attained with alternative, low-chloride fixers, for example, a fixer which includes the following active ingredients: SURFYNOLI^{®} 465 0.9% (a nonionic surfactant from Air Products and Chemicals), ZONYL^{®} FSN 0.1% (a fluorosurfactant from DuPont, available from Aldrich Chem. Co.), FLOQUAT^{®} FL 2350 2.0% (a polyamine available from SNF Floerger), trimethylolpropane 8.0% (a co-solvent available from Aldrich), 4-methylrnorpholine-4-oxide 13.6% (a solvent from BASF, available from Aldrich), methanesulfonic acid 8.7% (from Aldrich, used to titrate the pH of the fixer to 4.0), and deionized (DI) water 66.7%. Aluminum alloy 7075-T6 is the required alloy for corrosion testing according to the ASMT G-31-72 test method.

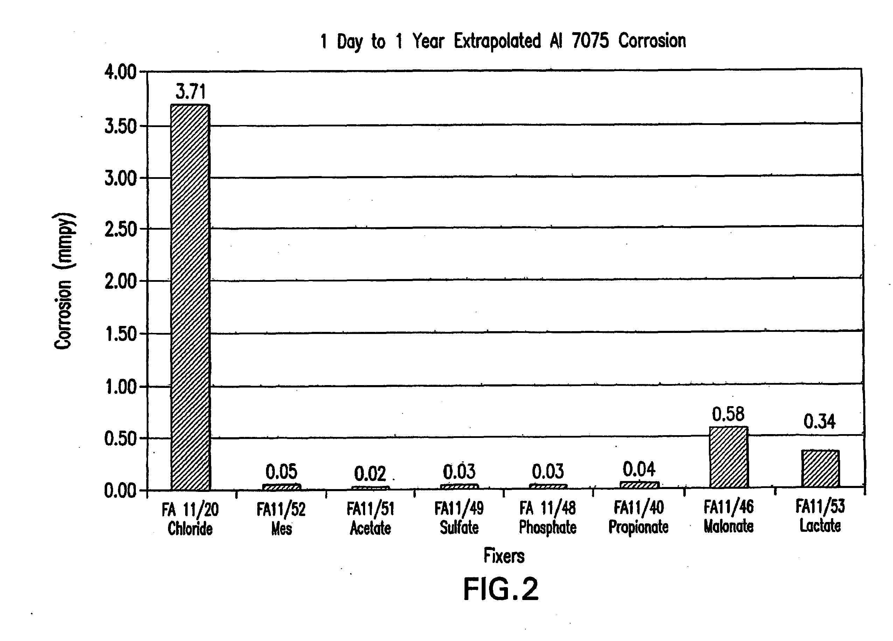

Both FIGs. 1 and 2 show the dramatic difference in aluminum corrosion rate for two polycations (polyamine (FL series) and polyguanidine (FA series) respectively). FIG. 2 illustrates an bar chart of the results of an official U.S. DOT test method for corrosion as performed on various exemplary fixers for one day extrapolated to one year.

Also disclosed are methods of preparing an ink with the disclosed fixer that is non-corrosive or has reduced corrosivity and that is non-halogenated or has a reduced number of halogens compared to conventional fixing agents. In the method of the present invention the disclosed polycation is dissolved with the disclosed counterion in water and/or a solvent. The polycation can be produced by, for example, polymerizing cationic monomer with no halogens, or a reduced number of halogens. The polycation can be produced by, for example, using dialysis to replace the halogen counterion with a non-halogen counterion. The polycation can be produced by, for example, ion-exchanging the halogen counterion with a non- (or less) corrosive, non-halogen counterion.

### Aqueous Vehicle

"Aqueous vehicle" refers to water or a mixture of water and at least one water-miscible organic solvent (co-solvent). Selection of a suitable mixture depends on requirements of the specific application, such as desired surface tension and viscosity, the selected fixer, drying time of the fixer fluid, and the type of substrate onto which an aqueous fixer fluid will be printed. If a mixture of water and a water-soluble solvent is used, the aqueous vehicle typically will contain 30% to 95% water with the balance (*e.g*., 70% to 5%) being the water-soluble solvent. Compositions can contain 60% to 95% water, based on the total weight of the aqueous vehicle.

The aqueous vehicle can be made to be fast penetrating (rapid drying) by including surfactants or penetrating agents such as glycol ethers and 1,2-alkanediols. Glycol ethers include ethylene glycol monobutyl ether, diethylene glycol mono-n-propyl other, ethylene glycol tnono-iso propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-propyl ether, and dipropylene glycol mono-isopropyl ether. 1,2-Alkanediols are preferably 1,2-C4-6 alkanediols, most preferably 1,2-hexanediol. Suitable surfactants include ethoxylated acetylene diols (*e.g*., Surfynol^{®} series from Air Products), ethoxylated primary (*e.g*., NEODOL^{®} series from Shell) and secondary (*e.g.*, TERGITOL^{®} series from Dow Chemical) alcohols, sulfosuccinates (*e.g*., AEROSOL^{®} series from Cytec), organosilicones (*e.g.,* SILWET^{®} series from Witco) and fluoro surfactants (*e.g.,* Zonyl^{®} series from DuPont). The amount of glycol ether(s) and 1,2-alkanediol(s) added can be properly determined, but is typically in the range of from 1 to 15% by weight and more typically 2 to 10% by weight, based on the total weight of the fixer fluid. Surfactants may be used, typically in the amount of 0.01 to 5% or 0.2 to 2%, based on the total weight of the fixer fluid.

The amount of vehicle in the fixer fluid is typically in the range of 70% to 99.8%, or 80% to 99.8%, based on total weight of the fixer fluid.

### Other Ingredients

Other ingredients may be formulated into the inks and fixer fluids disclosed herein, to the extent that such other ingredients do not interfere with the mutually interactive (fixing) mechanism of the ink set or the stability and jettabillty of the ink. Such other ingredients are generally well known in the art and include one or more of a biocide, *e.g.*, bactericide, fungicide, algicide and the like, sequestering agent, buffering agent, corrosion inhibitor, light stabilizer, anti-curl agent, thickener, defoamer, and the like, to improve various properties or function of the ink or fixer compositions as needed.

The amount of each ingredient must be properly determined, but is typically in the range of from 0.05 to 15% by weight, and more typically 0.2 to 10% by weight, based on the total weight of the ink.

Binders can also be used and can be soluble or dispersed polymer(s), added to the ink to improve the adhesion of a pigment. Examples of polymers that can be used include polyesters, polystyrene/acrylates, sulfonated polyesters, polyurothanes, polyimides and the like. When present, soluble polymer can be used at levels of at least 0.3%, or at least 0.6%. based on the total weight of the ink. Upper limits are dictated by ink viscosity or other physical limitations.

### Inkjet Ink Systems

Also disclosed are inkjet ink systems that have reduced corrosivity compared to conventional inkjet systems. One exemplary system includes an ink and a fixer, the fixer being formed to minimize corrosivity. The ink includes a colorant as described herein or otherwise known, and an aqueous first vehicle for the colorant, as described herein or otherwise known. The fixer includes the disclosed polycationic fixing agent, the specifically disclosed counterion for the polycationic fixing agent, and an aqueous second vehicle for the fixer as described herein or otherwise known. The counterion is selected to reduce or eliminate the amount of halogens in the fixer, thereby reducing the corrosivity of the inkjet ink system.

Many variations and modifications may be made to the above-described embodiments. All such modifications and variations are intended to be included herein within the scope of this disclosure and protected by the following claims.

## Claims

1. A fixer formulation for inkjet printing comprising:
water;
a polycationic fixing agent which is a cationic polymer; and
a counterion, wherein the counterion is chosen to reduce the presence of halogen in the fixer and is chosen from at least one of the following: an acetate, a nitrate, a sulfate, a phosphate, a propionate, a malonate, a mesylate, a lactate, a sulfonate, a phosphonate, a triflate, and combinations thereof.

2. The fixer formulation of claim 1, wherein the polycationic fixing agent is chosen from at least one of the following: polyamines, quaternized polyamines, polyguanidines, polyethyleneimines, dicyandiamide resins, poly(diallyldimethyl ammonium) resins, and combinations thereof.

3. The fixer formulation of claim 1, wherein the fixer formulation further comprises a water soluble cosolvent having lower vapor pressure than water.

4. The fixer formulation of claim 1, wherein the fixer formulation further comprises a water miscible surfactant.

5. The fixer formulation of claim 1, wherein the fixer formulation further comprises an acid with a pKa from 3 to 6.

6. The fixer formulation of claim 1, wherein the polycationic fixing agent has a structure that is capable of complexing with and insolubilizing an anionic dye.

7. The fixer formulation of claim 1, further comprising:
water in an amount of 50-95 wt % of the fixer formulation;
a water soluble cosolvent having a lower vapor pressure than water in an amount of 5-35 wt % of the fixer formulation;
a water miscible surfactant in an amount of 0.01-2 wt % of the fixer formulation;
the polycationic fixing agent in an amount of 0.5-8 wt % of the fixer formulation, wherein the polycationic fixing agent contains less than 500 ppm halogen; and
an acid in an amount of 1-20 wt % of the fixer formulation, wherein the acid has a pKa of 3-6.

8. A method of making an ink formulation substantially non-corrosive, comprising the steps of:
dissolving a polycation which is a cationic polymer, with a non-halogen containing counterion chosen from at least one of the following: an acetate, a nitrate, a sulfate, a phosphate, a propionate, a malonate, a mesylate, a lactate, a sulfonate, a phosphonate, a triflate, and combinations thereof, in a solvent to form a fixing formulation in a first vehicle; and
preparing an ink formulation in a second vehicle, wherein the fixing formulation is used to undercoat or overcoat the ink formulation on a substrate.

9. The method of claim 8, wherein the polycation is chosen from at least one of the following: polyamines, quaternized polyamines, polyguanidines, polyethyleneimines, dicyandiamide resins, poly(diallyldimethyl ammonium) resins, and combinations thereof.

10. An inkjet ink system with low corrosivity, the system comprising:
an ink, wherein the ink comprises a colorant, and a first aqueous vehicle for the colorant; and
a substantially non-corrosive fixer according to claim 1, wherein the fixer comprises a second aqueous vehicle for the fixer.

## Patentansprüche

1. Eine Fixiererformulierung zum Tintenstrahldrucken, die folgende Merkmale aufweist:
Wasser;
ein polykationisches Fixiermittel, das ein kationisches Polymer ist; und
ein Gegenion, wobei das Gegenion ausgewählt ist, um das Vorliegen eines Halogens in dem Fixierer zu reduzieren, und aus zumindest einem von Folgendem ausgewählt ist: einem Acetat, einem Nitrat, einem Sulfat, einem Phosphat, einem Propionat, einem Malonat, einem Mesylat, einem Lactat, einem Sulfonat, einem Phosphonat, einem Triflat und Kombinationen derselben.

2. Die Fixiererformulierung gemäß Anspruch 1, bei der das polykationische Fixiermittel aus zumindest einem von Folgendem ausgewählt ist: Polyaminen, quaternisierten Polyaminen, Polyguanidinen, Polyethyleniminen, Dicyandiamid-Harzen, Poly(Diallyldimethylammonium)-Harzen und Kombinationen derselben.

3. Die Fixiererformulierung gemäß Anspruch 1, wobei die Fixiererformulierung ferner ein wasserlösliches Hilfslösungsmittel mit einem geringeren Dampfdruck als Wasser aufweist.

4. Die Fixiererformulierung gemäß Anspruch 1, wobei die Fixiererformulierung ferner ein mit Wasser mischbares oberflächenaktives Mittel aufweist.

5. Die Fixiererformulierung gemäß Anspruch 1, wobei die Fixiererformulierung ferner eine Säure mit einem pKa-Wert zwischen 3 und 6 aufweist.

6. Die Fixiererformulierung gemäß Anspruch 1, bei der das polykationische Fixiermittel eine Struktur besitzt, die in der Lage ist, Komplexbindungen mit einem anionischen Farbstoff einzugehen und denselben unlöslich zu machen.

7. Die Fixiererformulierung gemäß Anspruch 1, die ferner folgende Merkmale aufweist:
Wasser in einer Menge zwischen 50 und 95 Gew.-% der Fixiererformulierung;
ein wasserlösliches Hilfslösungsmittel mit einem geringeren Dampfdruck als Wasser in einer Menge zwischen 5 und 35 Gew.-% der Fixiererformulierung;
ein mit Wasser mischbares oberflächenaktives Mittel in einer Menge zwischen 0,01 und 2 Gew.-% der Fixiererformulierung;
das polykationische Fixiermittel in einer Menge zwischen 0,5 und 8 Gew.-% der Fixiererformulierung, wobei das polykationische Fixiermittel weniger als 500 ppm eines Halogens beinhaltet; und
eine Säure in einer Menge zwischen 1 und 20 Gew.-% der Fixiererformulierung, wobei die Säure einen pKa-Wert zwischen 3 und 6 aufweist.

8. Ein Verfahren dafür, eine Tintenformulierung im Wesentlichen nicht-korrosiv zu machen, das folgende Schritte aufweist:
Lösen eines Polykations, das ein kationisches Polymer ist, mit einem kein Halogen beinhaltenden Gegenion, das aus zumindest einem von Folgendem ausgewählt ist: einem Acetat, einem Nitrat, einem Sulfat, einem Phosphat, einem Propionat, einem Malonat, einem Mesylat, einem Lactat, einem Sulfonat, einem Phosphonat, einem Triflat und Kombinationen derselben, in einem Lösungsmittel, um eine Fixierformulierung in einem ersten Trägermittel zu bilden;
Herstellen einer Tintenformulierung in einem zweiten Trägermittel, wobei die Fixierformulierung verwendet wird, um eine Unterschicht oder Überschicht der Tintenformulierung auf einem Substrat zu bilden.

9. Das Verfahren gemäß Anspruch 8, bei dem das Polykation aus zumindest einem von Folgendem ausgewählt ist: Polyaminen, quaternisierten Polyaminen, Polyguanidinen, Polyethyleniminen, Dicyandiamid-Harzen, Poly(Diallyldimethylammonium)-Harzen und Kombinationen derselben.

10. Ein Tintenstrahltintensystem mit niedriger Korrosivität, wobei das System folgende Merkmale aufweist:
eine Tinte, wobei die Tinte ein Farbmittel aufweist, und ein erstes wässriges Trägermittel für das Farbmittel; und
einen im Wesentlichen nicht-korrosiven Fixierer gemäß Anspruch 1, wobei der Fixierer ein zweites wässriges Trägermittel für den Fixierer aufweist.

## Revendications

1. Formulation de fixateur pour impression à jet d'encre comprenant :
- de l'eau
- un agent de fixage polycationique qui est un polymère cationique ; et
- un contre-ion, dans lequel le contre-ion est choisi de manière à réduire la présence d'halogènes dans le fixateur et est choisi parmi au moins l'un des composés suivants : un acétate, un nitrate, un sulfate, un phosphate, un propionate, un malonate, un mésylate, un lactate, un sulfonate, un phosphonate, un triflate et leurs combinaisons.

2. Formulation de fixateur selon la revendication 1, dans laquelle l'agent de fixage polycationique est choisi parmi au moins l'un des composés suivants : des polyamines, des polyamines quaternisées, des polyguanidines, des polyéthylèneimines, des résines dicyandiamide, des résines de poly(diallyldiméthyl ammonium) et leurs combinaisons.

3. Formulation de fixateur selon la revendication 1, dans laquelle la formulation de fixateur comprend en outre un co-solvant soluble dans l'eau ayant une tension de vapeur inférieure à celle de l'eau.

4. Formulation de fixateur selon la revendication 1, dans laquelle la formulation de fixateur comprend en outre un tensioactif miscible avec l'eau.

5. Formulation de fixateur selon la revendication 1, dans laquelle la formulation de fixateur comprend en outre un acide ayant un pKa de 3 à 6.

6. Formulation de fixateur selon la revendication 1, dans laquelle l'agent de fixage polycationique possède une structure qui est capable de se complexer avec une teinture anionique et de l'insolubiliser.

7. Formulation de fixateur selon la revendication 1, comprenant en outre :
- de l'eau dans une quantité de 50 à 95 % en poids de la formulation de fixateur ;
- un co-solvant soluble dans l'eau ayant une tension de vapeur inférieure à celle de l'eau dans une quantité de 5 à 35 % en poids de la formulation de fixateur ;
- un tensioactif miscible avec l'eau dans une quantité de 0,01 à 2 % en poids de la formulation de fixateur ;
- l'agent de fixage polycationique dans une quantité de 0,5 à 8 % en poids de la formulation de fixateur, dans lequel l'agent de fixage polycationique contient moins de 500 ppm d'halogènes ; et
- un acide dans une quantité de 1 à 20 % en poids de la formulation de fixateur, dans lequel l'acide a un pKa de 3 à 6.

8. Procédé de préparation d'une formulation d'encre sensiblement non corrosive, comprenant les étapes consistant à :
- dissoudre un polycation qui est un polymère cationique avec un contre-ion ne contenant pas d'halogènes choisi parmi au moins l'un des composés suivants : un acétate, un nitrate, un sulfate, un phosphate, un propionate, un malonate, un mésylate, un lactate, un sulfonate, un phosphonate, un triflate et leurs combinaisons, dans un solvant, pour former une formulation de fixage dans un premier excipient ; et
- préparer une formulation d'encre dans un deuxième excipient, la formulation de fixage étant utilisée pour appliquer une sous-couche ou une sur-couche de la formulation d'encre sur un substrat.

9. Procédé selon la revendication 8, dans lequel le polycation est choisi parmi au moins l'un des composés suivants : des polyamines, des polyamines quaternisées, des polyguanidines, des polyéthylèneimines, des résines dicyandiamide, des résines de poly(diallyldiméthyl ammonium) et leurs combinaisons.

10. Système d'encre pour jet d'encre de faible corrosivité, le système comprenant :
- une encre, dans laquelle l'encre comprend un colorant et un premier excipient aqueux pour le colorant ; et
- un fixateur sensiblement non corrosif selon la revendication 1, le fixateur comprenant un deuxième excipient aqueux pour le fixateur.
